# EUROPÄISCHE PATENTSCHRIFT

(11) **EP 0 825 917 B1**
(45) Veröffentlichungstag und Bekanntmachung des Hinweises auf die Patenterteilung: **19.01.2000**
(21) Anmeldenummer: 96909975.3
(22) Anmeldetag: 18.04.1996
(51) Int. Cl.: B28D 1/22, E01C 11/24, E04F 15/08

(54) **RUTSCHFESTER FUSSBODENBELAG UND VERFAHREN ZU SEINER HERSTELLUNG**
NON-SLIP FLOOR COVERING AND PROCESS FOR PRODUCING IT
REVETEMENT DE SOL ANTIDERAPANT ET SON PROCEDE DE PRODUCTION

(30) Priorität: 18.05.1995 DE 19518270
(43) Veröffentlichungstag der Anmeldung: 04.03.1998
(73) Patentinhaber: FRAUNHOFER-GESELLSCHAFT ZUR FÖRDERUNG DER ANGEWANDTEN FORSCHUNG E.V., 80636 München (DE); Sievers, Thomas, 21379 Rullstorf (DE)
(72) Erfinder: SIEVERS, Thomas, D-21379 Rullstorf (DE); WIEDEMANN, Günter, Dr., D-01237 Dresden (DE); STÜRMER, Udo, D-01737 Tharandt (DE)
(86) Internationale Anmeldenummer: DE9600703
(87) Internationale Veröffentlichungsnummer: WO9636469

(56) Entgegenhaltungen:
- EP-A- 0 300 224
- DE-A- 4 038 048
- GB-A- 2 206 614
- US-A- 5 246 530
- PATENT ABSTRACTS OF JAPAN vol. 95, no. 001 & JP,A,07 001165 (ISAO KIN), 6.Januar 1995,

## Beschreibung

Die Erfindung betrifft einen rutschfesten Fußbodenbelag und ein Verfahren zu seiner Herstellung. Ein besonderes Anwendungsgebiet der Erfindung betrifft hochglanzpolierte Fußböden insbesondere aus mineralischen Werkstoffen, wie beispielsweise Steine (z.B. Granit), wie sie häufig in öffentlichen bzw. öffentlich zugänglichen Gebäuden verwendet werden, oder auch Keramik.

Ausrutschen ist eine der häufigsten Unfallursachen in Deutschland. Die Schwere solcher Unfälle wird meist unterschätzt. Zur Erhöhung der Trittsicherheit müssen Schuhsohlen und Fußböden rutschhemmend gestaltet werden. Dies ist vor allem dort notwendig, wo gleiffördernde Medien auf den Boden gelangen. In vielen Bereichen des öffentlichen Lebens aber auch im Privatbereich ist es üblich, polierte, glänzende Natursteinplatten als repräsentative Fußbodenbeläge sowohl in Trocken- als auch in Naßbereichen sowie Übergangsbereichen (Foyer) einzusetzen. Dabei gilt es, die rutschhemmenden Eigenschaften mit der architektonischen Ästhetik in Einklang zu bringen. Die Bewertung der Rutschhemmung erfolgt nach [ **DIN 51097** - Bestimmung der rutschhemmenden Eigenschaft - Naßbelastete Barfußbereiche - Begehungsverfahren - Schiefe Ebene und **DIN 51130** - Bestimmung der rutschhemmenden Eigenschaft - Arbeitsräume und Arbeitsbereiche mit erhöhter Rutschgefahr - Begehungsverfahren - Schiefe Ebene ] mittels einer schiefen Ebene.

Es existieren aber auch Meßgeräte zur instationären Reibzahlmessung [ **Fb 701** Vergleichsuntersuchung zur instationären Reibzahlmessung auf Fußböden (Schriftenreihe der Bundesanstalt für Arbeitsschutz) ].

Zur Herstellung bzw. Erhöhung der rutschhemmenden Eigenschaften von Fußböden aus Naturstein existieren unterschiedliche Verfahren. Deren Einsatz hängt vorwiegend davon ab, wo der Bodenbelag verlegt werden soll oder schon verlegt ist (Innenbereich, Außenbereich, zu erwartender Verschmutzungsgrad u.a.). Im folgenden werden die wichtigsten Verfahren kurz beschrieben.

Beim Strahlen wird ein der gewünschten Rauheit entsprechendes Strahlgut mit hohem Druck auf die Oberfläche geschleudert. Das mehr oder weniger harte Strahlgut führt zu einer unregelmäßigen Aufrauhung und starken Mattierung der Oberfläche [DE-A-31 39 427].

Beim Flammstrahlen werden hochenergetische Brenngas-Sauerstoff-Flammen erzeugt, mit denen die zu behandelnde Oberfläche kurzzeitig stark erhitzt wird. Durch die Einwirkung der Flammen erfolgt in der obersten Gesteinszone ein Sprengen des Quarzes sowie ein Schmelzen von Gesteinsteilen, die anschließend glasartig erstarren und verhältnismäßig lose auf der Oberfläche haften [DE-A-35 45 064].

Das Stocken erfolgt unter Verwendung eines Stockwerkzeuges (Stockhammer), welches mit mehreren, gleichmäßig angeordneten Meißelspitzen versehen ist. Während einer kontinuierlichen Werkstückbewegung wird der Stockhammer mit einer bestimmten Frequenz auf die Oberfläche geschlagen [DE-A-39 33 843].

Die beschriebenen oder ähnlichen Verfahren, die Abrasivmittel bzw. meißelartige Werkzeuge benutzen, führen zwar zur Erhöhung der Trittsicherheit, aber wie auch z.B. herstellungsseitig weniger polierte Flächen zu einem erheblichen Glanzverlust und damit Minderung des ästhetischen Wertes.

Die Beschichtung von Oberflächen zur Erhöhung der Rutschfestigkeit hat zur Folge, daß die behandelte Fläche mit Noppen versehen wird [DE-A-33 42 266]. Diese Methode bringt zwar keine Veränderung der optischen Eigenschaften mit sich, ist aber nur begrenzt haltbar, da sich ein Abrieb nicht vermeiden läßt.

Bei der chemischen Ätzbehandlung von Natursteinoberflächen werden durch die Einwirkung flußsäurehaltiger Substanzen vor allem die Feldspatanteile angegriffen [Informationsblatt des Bundesverbandes Trittsicherheit, Abteilung Öffentlichkeitsarbeit]. Die Schädigung beträgt nur wenige Mikrometer, der Quarz wird weitestgehend geschont. Der Glanzverlust hängt von der Einwirkdauer ab, die Veränderung der Gesamtoptik muß an einer Probefläche getestet werden. Dieses Verfahren ist derzeit das sinnvollste zur Erhöhung der Trittsicherheit von polierten Natursteinfußböden. Es ist allerdings weitestgehend auf die Anwendung auf mineralischen Bodenbelägen beschränkt. Chemische Zusammensetzung und Konzentration müssen den unterschiedlichen Arten von Belägen angepaßt werden. Durch lange Einwirkzeiten sowie exakte Einhaltung der Konzentration läßt sich dieses Verfahren nicht, oder nur mit sehr hohem Aufwand in den Herstellungsprozeß der Fliesen integrieren. Für Kunststoffbeläge ist dieses Verfahren nicht ohne weiteres geeignet. Bei unsachgemäßer Anwendung und Entsorgung der flußsäurehaltigen Substanz besteht eine erhöhte Gefährdung hinsichtlich Umwelt- und Arbeitsschutz.

Es ist nunmehr Aufgabe der Erfindung, einen rutschfesten Fußbodenbelag, dessen Oberfläche hochglanzpoliert sein kann, und ein Verfahren zu dessen Herstellung anzugeben, die sämtliche Nachteile des Standes der Technik nicht aufweisen.

Es ist somit Aufgabe der Erfindung, einen rutschfesten Fußbodenbelag der genannten Art vorzuschlagen, bei dem trotz Rutschfestigkeit optisch keine Abstriche an der hochglanzpolierten Oberfläche gemacht werden müssen und der einfach und umweltfreundlich herstellbar ist.

Darüber hinaus ist es Aufgabe der Erfindung, ein Verfahren der genannten Art zu entwickeln, mit dem die Rutschfestigkeit nicht erst als Nachbehandlung am Einsatzort des Fußbodenbelages sondern gleich am Ort seiner Herstellung erzeugt wird, das einfach und umweltfreundlich ist und das die Optik und Ästhetik der Oberfläche des Fußbodenbelages in vollem Umfang erhält.

Erfindungsgemäß werden diese Aufgaben den rutschfesten Fußbodenbelag betreffend gemäß einem oder mehreren der Ansprüche 1 bis 8 und mit einem Verfahren gemäß einem oder mehreren der Ansprüche 9 bis 11 gelöst.

Der rutschfeste Fußbodenbelag, insbesondere aus mineralischen Werkstoffen, wie z.B. Stein, Granit, mit hochglanzpolierter Oberfläche ist erfindungsgemäß an seiner hochglanzpolierten Oberfläche zusätzlich rutschfest. Das wird erreicht, indem sich auf der hochglanzpolierten Fußbodenbelagoberfläche Vertiefungen (Mikrokrater) mit Saugnapfwirkung, die vorzugusweise linsenförmig, scharfkantig, möglichst flach und für das menschliche Auge unsichtbar sind, statistisch verteilt, vorzugsweise aber unregelmäßig angeordnet befinden. Unsichtbar bedeutet in diesem Fall, daß die Mikrokrater aus einer bestimmten Entfernung aufgrund des Auflösungsvermögens des menschlichen Auges nicht als solche erkannt werden. Die Auflösungsschwelle wird beim normalsichtigen Beobachter unter optimalen Beleuchtungsverhältnissen bei etwa einer Winkelminute angenommen [Warnecke, H.J.; Dutschke, W.: Fertigungsmeßtechnik, Handbuch für Industrie und Wissenschaft, Springer-Verlag Berlin Heidelberg New York Tokio 1984]. Das heißt, daß aus einem minimalen Beobachtungsabstand von 1,5 m (aufrechtgehender, erwachsener Mensch) ein Krater mit einer maximalen lateralen Ausdehnung von 0,44 mm gerade noch gesehen werden kann. Vorzugsweise weisen diese Mikrokrater einen Durchmesser von 0,03 - 0,4 mm und eine Tiefe von 0,01 - 0,2 mm auf. Bei Fußbodenplatten befinden sich vorteilhafterweise mehr als 100 (günstig sind bei Fußbodenplatten aus Granit mehr als 250) Mikrokrater pro cm².

Hergestellt wird dieser erfindungsgemäße rutschfeste Fußbodenbelag mit hochglanzpolierter Oberfläche mittels Impulslaserbeschuß. Erfindungsgemäß werden durch gezielte Einwirkung von Impulslaserstrahlen linsenförmige und scharfkantige Mikrokrater, die für das menschliche Auge unsichtbar sind und eine Saugnapfwirkung zeigen, statistisch verteilt und in unregelmäßiger Anordnung erzeugt. Die Laserstrahlparameter, wie z.B. Energiedichte, Pulsdauer usw., werden in Abhängigkeit vom Werkstoff des Fußbodenbelages so gewählt, daß der Materialabtrag zur Erzeugung der Mikrokrater im wesentlichen durch Verdampfung erfolgt.

Im Falle der Behandlung der hochglanzpolierten Oberfläche eines Fußbodenbelages aus Naturstein, wie z.B. Granit, betragen die Pulsenergie von 0,4 mJ bis 1,5 mJ, die Pulsdauer von 50 ns bis 250 ns, der Arbeitsfleckdurchmesser von 0,05 mm bis 0,2 mm und der Abstand der einzelnen Mikrokrater zueinander 0,25 bis 0,8 mm.

Im Gegensatz zu den Verfahren Flammen, Stocken und Strahlen, handelt es sich bei der Laserstrukturierung um eine berührungslose Feinbearbeitung der Oberfläche. Die Struktur kann sowohl regelmäßig als auch gezielt unregelmäßig sein und zeichnet sich durch eine geringe Schädigung der Gesamtfläche aus. Härte und Zusammensetzung des Materials spielen keine Rolle. Das Verfahren zeichnet sich durch eine gute Steuerbarkeit der Parameter aus, d.h. Dichte, Tiefe und Durchmesser der Mikrokrater lassen sich beliebig variieren. Somit kann der rutschhemmende Effekt mehr oder weniger stark ausgeprägt werden. Aufgrund nationaler und internationaler Forschungsergebnisse kann gegenwärtig ein Reibwert von µ = 0,43 zwischen Schuh- bzw. Fußsohle und Fußboden als ausreichend sicher und damit rutschfest gelten [ Fb 701 - Vergleichsuntersuchung zur instationären Reibzahlmessung auf Fußböden (Schriftenreihe Bundesanstalt für Arbeitsschutz) ]. Dieser Wert wird in jedem Fall erreicht bzw. überschritten. Damit ist eine Bewertung und Einstufung nach [ DIN 51130 - Bestimmung der rutschhemmenden Eigenschaft - Arbeitsräume und Arbeitsbereiche mit erhöhter Rutschgefahr - Begehungsverfahren - Schiefe Ebene, ZH 1/571 - Merkblatt für Fußböden in Arbeitsräumen und Arbeitsbereichen mit Rutschgefahr und GUV 26.17 - Merkblatt des Bundesverbandes der Unfaliversicherungsträger der öffentlichen Hand - BAGUV - über Bodenbeläge für naßbelastete Barfußbereiche ], möglich.

Ein Zerstören der makroskopischen Optik der Fußbodenbelagsoberfläche, z.B. des Gesteins kann sicher ausgeschlossen werden. Deshalb bezieht sich die Anwendung vorrangig auf polierte bzw. glatte, glänzende Flächen.

Der Vorteil der Laserbearbeitung gegenüber der chemischen Behandlung mineralischer Fußbodenbeläge mit einer flußsäurehaltigen Substanz besteht darin, daß sie sich direkt in die Fußbodenbelagsherstellung, einschließlich Platten aus Naturwerkstein, integrierten läßt (Trittsicherheit ab Werk). Das heißt, der Architekt oder Bauherr kann sich vor der Verlegung, z.B. eines Natursteinbelages, von dessen Eigenschaften überzeugen. Eine nachträgliche Behandlung und damit verbundene optische Veränderung des Fußbodens ist nicht notwendig.

Die Laserbearbeitung ist umweltverträglich, da keine chemischen Substanzen zum Einsatz kommen. Bei den entstehenden Abprodukten handelt es sich hinsichtlich Zusammensetzung um definierte, dem Ausgangsmaterial entsprechende Stoffe, welche problemlos abgesaugt und entsorgt werden können. Die Methode ist auf alle nicht ausreichend rutschfesten Fußbodenbeläge anwendbar.

Gegenüber existierenden Beschichtungsverfahren zur Verbesserung des Anti-Slip-Effektes zeichnet sich die Laserstrukturierung durch längere Haltbarkeit aus. Der Abrieb ist wesentlich geringer als bei einer zusätzlichen Beschichtung, die nicht die Härte des Grundgesteins aufweist.

Mit der Erfindung wird ein Verfahren realisiert, das die genannten Nachteile beseitigt, darüber hinaus für unterschiedliche Fußbodenbeläge einsetzbar ist und in den Herstellungsprozeß derselben integriert werden kann.

Erfindungsgemäß wird das Erzeugen von Mikrokratern mit Saugnapfwirkung durch Einwirkung von Laserimpulsen vorgenommen. Die für das Erreichen des Effektes wesentlichen Parameter
- Arbeitsfleckdurchmesser (bestimmt laterale Ausdehnung der Saugnäpfe),
- Einwirkzeit und Pulsenergie (bestimmen Tiefe der Krater und im Zusammenhang mit der Wellenlänge des Lasers die Art der Wechselwirkung (Verdampfen / Schmelzen) sowie der
- Abstand der Einwirkstellen (Anzahl und Anordnung der Krater)
sind leicht steuerbar und können somit dem jeweiligen Werkstoff und den zu erreichenden Effekten bezüglich des optischen Eindrucks und der Reibzahl angepaßt werden.

Die oben genannten Parameter sind vorzugsweise auch so zu steuern, daß der Materialabtrag im wesentlichen durch Verdampfen erfolgt, um das Entstehen von Schmelzwülsten und unscharfer Kanten zu vermeiden, da ansonsten der Saugnapfeffekt beeinträchtigt wird. Es soll praktisch erreicht werden, eine hohe Energie in sehr kurzer Zeit einzutragen, wobei die Werkstoffabhängigkeit berücksichtigt wird.

Form, Tiefe und Breite sind weiterhin so einzustellen, daß eine vorzugsweise linsenförmige oder flache Vertiefung entsteht, deren Tiefe höchstens die halbe maximale laterale Ausdehnung des Kraters beträgt, und die Tiefe die maximale laterale Ausdehnung des Kraters nicht übersteigt, so daß keine permanente Schmutzanhaftung erfolgt. Die Ablenkung des Laserstrahls über der Oberfläche erfolgt mit bekannten, nicht zum Gegenstand der Erfindung gehörenden Baugruppen wie sie z.B. aus dem Lasereinsatz zum Beschriften oder zur Oberflächeninspektion bekannt sind (Scanner oder Polygonspiegel in Verbindung mit Planfeldoptiken).

Die Anordnung der Krater kann regelmäßig oder unregelmäßig erfolgen, wobei bei geforderter noch höherer Trittsicherheit die regelmäßige Anordnung und bei noch geringerer optischer Beeinträchtigung der polierten Oberfläche die unregelmäßige Anordnung der Mikrokrater mit Saugnapfwirkung von Vorteil ist.

Das Verfahren kann dahingehend verbessert werden, daß durch geeignete Sensorik (z.B. photooptische Abtastung) die Oberflächeneigenschaften (z.B. Farbe) und/oder die lokale Materialzusammensetzung (z.B. durch werkstoffspezifische Absorption und/oder Reflektion) an der zu bearbeitenden Stelle erfaßt werden, und diese Signale für eine Steuerung der Laserquelle (z.B. Pulsenergie) genutzt werden. Dadurch wäre auch die Unterbrechung der Bearbeitung bei optisch erhaltenswerten Flächen (z.B. bestimmte Kristallarten bei Naturstein) realisierbar.

Die erfindungsgemäße Lösung enthält ein flexibles, umwelffreundliches Verfahren zur Herstellung von bedarfsgerechter, anforderungsgemäßer Rutschfestausrüstung von glatten Fußbodenbelägen (z.B. polierte, mineralische Fußbodenplatten, Kunststoffbeläge und dgl.) unter Beibehaltung der optischen und respräsentativen Eigenschaften, wobei auf der Oberfläche eine anforderungsgemäße Anzahl von vorzugsweise linsenförmigen, für das menschliche Auge nicht sichtbaren Mikrosaugnäpfen mit anforderungsgemäßer Geometrie und Verteilung auf der Oberfläche, durch Einwirkung von gepulster Laserstrahlung, erzeugt werden. Diese anforderungsgemäße bzw. bedarfsgerechte Rutschfestausrüstung inklusive der Anpassung an den Werkstoff wird durch die gezielte Variation und/oder Auswahl der Laserbestrahlungsparameter Arbeitsfleckdurchmesser, Wellenlänge, Pulsenergie, Einwirkzeit und Abstand der Mikrosaugnäpfe erreicht. Dabei sollten die Parameter so gewählt werden, daß die abtragende Wirkung vorzugsweise durch Verdampfen des Werkstoffes an der Einwirkstelle erfolgt. Durch geeignete Sensorik kann eine Erfassung der lokalen Oberflächeneigenschaften stattfinden (z.B. die Farbe von einzelnen, die Oberfläche bildenden Bestandteile des Fußbodens und/oder die lokale chemische Zusammensetzung, beispielsweise von Kristallen bei mineralischen Belägen) und es können diese Informationen zur Steuerung der Laserparameter und/oder der geometrischen Anordnung der Lasereinwirkstellen, einschließlich Aussparen von Teilbereichen der Oberfläche, genutzt werden.

Ein großer Vorteil des erfindungsgemäßen Verfahrens ist, daß es problemlos in den Fertigungsprozeß der Fußbodenbeläge integrierbar ist.

Sämtliche Nachteile des Standes der Technik können mit der Erfindung beseitigt werden.

Der erfindungsgemäße Fußbodenbelag und das erfindungsgemäße Verfahren werden in nachfolgendem Ausführungsbeispiel beschrieben.

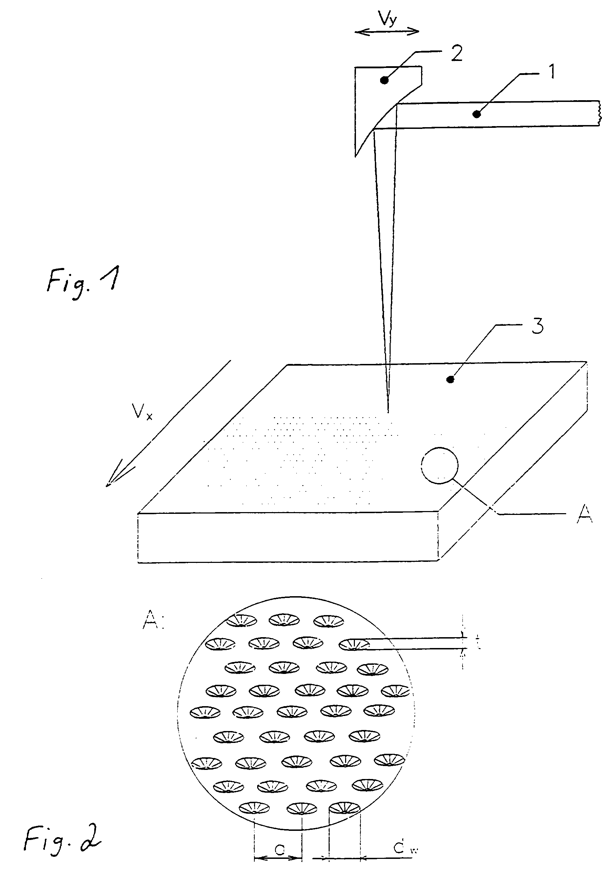

- Figur 1: zeigt dabei die Aufbringung der Mikrokrater
und
- Figur 2: stellt die Mikrokrater selbst dar.

### Ausführungsbeispiel

- Forderung:: - Fußbodenfliesen aus Lausitzer Granit poliert
- rutschhemmend bei Einwirkung von Wasser
- Verlegung im Eingangsbereich Hotel → bestmögliche Beibehaltung der optischen Qualität
- Realisierung:: - Bearbeitung mittels Nd: YAG-LaserEnergiedichte 17 J/cm², Pulsdauer 130 ns, Brennweite 150 mm
- Focussierung auf Werkstückoberfläche
- Relativbewegung zwischen Laserfocus und Werkstück erfolgt vorzugsweise durch eine Ablenkoptik in y-Richtung und durch Werkstückweitertransport in x-Richtung
- 1 Impuls je zu erzeugender Krater
- erzeugter Kraterdurchmesser d_{w} 0,04 - 0,45 mm
- Abstand a der Krater in x- und y-Richtung 0,5 mm
- erzeugte Tiefe t 0,1 mm
- Ergebnis:: - ermittelte Reibzahl: µ = 0,47 (gemessen mit FSC 2000, Kunststoffgleiter, Gleitmittel: entspanntes Wasser)
- Glanzverlust: < 11 %
- gesamtoptische Beeinträchtigung sehr gering

### Aufstellung der verwendeten Bezugszeichen und Begriffe

- 1: Laserstrahl
- 2: Fokussierspiegel
- 3: Werkstück /Fußbodenplatte

- t: erzeugte Tiefe der Mikrokrater
- a: Abstand der Mikrokrater zueinander
- d_{w}: erzeugter Durchmesser der Mikrokrater = Arbeitsfleckdurchmesser
- V_{y}: Ablenkgeschwindigkeit des Laserstrahls
- Vₓ: Vorschubgeschwindigkeit der Fußbodenplatte / Werkstück in x-Richtung

## Patentansprüche

1. Rutschfester Fußbodenbelag, insbesondere aus mineralischen Werkstoffen, **dadurch gekennzeichnet,** daß die Oberfläche des Fußbodenbelages zusätzlich rutschfest ist, indem auf ihr Vertiefungen in Form von Mikrokratern mit Saugnapfwirkung statistisch verteilt angeordnet sind.

2. Rutschfester Fußbodenbelag nach Anspruch 1, **dadurch gekennzeichnet,** daß die Vertiefungen, die in Form von Mikrokratern mit Saugnapfwirkung statistisch verteilt angeordnet sind, möglichst flach sind.

3. Rutschfester Fußbodenbelag nach Anspruch 1 oder 2, **dadurch gekennzeichnet,** daß die Vertiefungen für das menschliche Auge unsichtbar sind.

4. Rutschfester Fußbodenbelag nach einem oder mehreren der Ansprüche 1 bis 3, **dadurch gekennzeichnet,** daß die Vertiefungen scharfkantig sind.

5. Rutschfester Fußbodenbelag nach einem oder mehreren der Ansprüche 1 bis 4, **dadurch gekennzeichnet,** daß die Vertiefungen eine linsenförmige Geometrie aufweisen.

6. Rutschfester Fußbodenbelag nach einem oder mehreren der Ansprüche 1 bis 5, **dadurch gekennzeichnet,** daß diese Vertiefungen eine maximale laterale Ausdehnung von 0,4 mm und eine Tiefe von 0,01 - 0,2 mm aufweisen.

7. Rutschfester Fußbodenbelag nach einem oder mehreren der Ansprüche 1 bis 6, **dadurch gekennzeichnet,** daß bei rutschfesten Fußbodenplatten mehr als 100 Vertiefungen pro cm² auf deren Oberfläche angeordnet sind.

8. Rutschfester Fußbodenbelag nach Anspruch 7, **dadurch gekennzeichnet,** daß bei rutschfesten Fußbodenplatten aus Granit mehr als 250 Vertiefungen pro cm² auf deren Oberfläche angeordnet sind.

9. Verfahren zur Herstellung rutschfester Fußbodenbeläge, insbesondere aus mineralischen Werkstoffen, wie z.B. Stein oder Granit oder Keramik, gemäß einem oder mehreren der Ansprüche von 1 bis 8 mittels Impulslaserbeschuß, **dadurch gekennzeichnet,** daß auf der Oberfläche des Fußbodenbelages durch gezielte Einwirkung von Laserimpulsen Mikrokrater mit Saugnapfwirkung, die für das menschliche Auge unsichtbar sind, statistisch verteilt erzeugt werden.

10. Verfahren nach Anspruch 9, **dadurch gekennzeichnet,** daß die Laserstrahlparameter, wie z.B. Energiedichte, Pulsdauer usw., in Abhängigkeit vom Werkstoff des Fußbodenbelages so gewählt werden, daß der Materialabtrag zur Erzeugung der Mikrokrater im wesentlichen durch Verdampfung erfolgt.

11. Verfahren nach Anspruch 10, **dadurch gekennzeichnet,** daß im Falle der Behandlung der hochglanzpolierten Oberfläche eines Fußbodenbelages aus Naturstein, wie z.B. Granit, die Pulsenergie 0,4 mJ bis 1,5 mJ, die Pulsdauer 50 ns bis 250 ns, der Arbeitsfleckdurchmesser 0,05 mm bis 0,2 mm und der Abstand der einzelnen Mikrokrater zueinander 0,25 mm bis 0,8 mm betragen.

## Claims

1. A non-slip flooring, especially of mineral materials, characterized in that the surface of the flooring is additionally non-slip in that depressions in the form of micro-craters with sucker action are statistically distributed over it.

2. A non-slip flooring according to claim 1, characterized in that the depressions which are statistically distributed in the form of micro-craters with sucker action are as flat as possible.

3. A non-slip flooring according to claim 1 or 2, characterized in that the depressions are not visible to the human eye.

4. A non-slip flooring according to one or more of claims I to 3, characterized in that the depressions have sharp edges.

5. A non-slip flooring according to one or more of claims 1 to 4, characterized in that the depressions have a lenticular geometry.

6. A non-slip flooring according to one or more of claims 1 to 5, characterized in that these depressions have maximum lateral extent of 0.4 mm and a depth from 0.01 to 0.2 mm.

7. A non-slip flooring according to one or more of claims I to 6, characterized in that more than 100 depressions per cm² are disposed on its surface for non-slip floor tiles.

8. A non-slip flooring according to claim 7, characterized in that more than 250 depressions per cm² are disposed on its surface for non-slip floor tiles of granite.

9. A method of producing non-slip floorings, especially of mineral materials, such as stone or granite or ceramic for example, according to one or more of the claims from 1 to 8, by means of pulsed laser bombardment, characterized in that micro-craters with sucker action, which are not visible to the human eye, are created on the surface of the flooring with a statistical distribution by targeted action of laser pulses.

10. A method according to claim 9, characterized in that the laser beam parameters, such as energy density, pulse duration, etc. for example are so selected in dependence on the material of the flooring that the removal of material for creation of the micro-craters takes place essentially by vaporisation.

11. A method according to claim 10, characterized in that, in the case of treatment of the highly polished surface of a flooring of natural stone such a granite for example, the pulse energy amounts to 0.4 mJ to 1.5 mJ, the pulse duration amounts to 50 ns to 250 ns, the working spot diameter amounts to 0.05 mm to 0.2 mm and the spacing of the individual micro-craters from one another amounts to 0.25 mm to 0.8 mm.

## Revendications

1. Revêtement de sol antidérapant, en particulier constitué de matériaux minéraux,
caractérisé en ce que
la surface du revêtement de sol est résistante au dérapage, surtout par le fait qu'elle comporte des cavités réparties statistiquement, réalisées sous la forme de microcratères, ayant un effet de ventouse.

2. Revêtement de sol antidérapant selon la revendication 1,
caractérisé en ce que
les cavités réparties statistiquement sous la forme de micro-cratères ayant un effet de ventouse, sont aussi plates que possible.

3. Revêtement de sol antidérapant selon la revendication 1 ou 2,
caractérisé en ce que
les cavités sont invisibles à l'oeil humain.

4. Revêtement de sol antidérapant selon l'une ou plusieurs des revendications 1 à 3,
caractérisé en ce que
les cavités sont à arête vive.

5. Revêtement de sol antidérapant selon l'une ou plusieurs des revendications 1 à 4,
caractérisé en ce que
les cavités ont une géométrie lenticulaire.

6. Revêtement de sol antidérapant selon l'une ou plusieurs des revendications 1 à 5,
caractérisé en ce que
ces cavités ont une dimension latérale maximale de 0,4 mm et une profondeur de 0,01 - 0,2 mm.

7. Revêtement de sol antidérapant selon l'une ou plusieurs des revendications 1 à 6,
caractérisé en ce que
dans le cas de plaques de sol antidérapantes, plus de 1000 cavités par centimètre carré sont disposées sur sa surface.

8. Revêtement de sol antidérapant selon la revendication 7,
caractérisé en ce que
dans le cas de plaques de sol antidérapantes en granit, plus de 250 cavités par centimètre carré sont disposées sur sa surface.

9. Procédé de fabrication de revêtements de sol antidérapants en particulier à partir de matériaux minéraux, tels que par exemple de la pierre ou du granit ou de la céramique selon une ou plusieurs des revendications 1 à 8, au moyen d'un tir par un laser à impulsions,
caractérisé en ce que
des microcratères à effet de ventouse, invisibles à l'oeil humain, qui sont répartis statistiquement, sont générés sur la surface du revêtement de sol, par un effet ciblé d'impulsions laser.

10. Procédé selon la revendication 9,
caractérisé en ce que
les paramètres de rayonnement laser, tels que, par exemple, la densité d'énergie et la durée de pulsation, ou autres, sont choisis en fonction du matériau du revêtement de sol, de manière que l'enlèvement ou abrasion de matériau destiné à générer les microcratères s'effectue sensiblement par évaporation.

11. Procédé selon la revendication 10,
caractérisé en ce qu'
en cas de traitement de la surface, présentant un poli élevé, d'un revêtement de sol en pierre naturelle, tel que par exemple du granit, l'énergie de pulsation est de 0,4 mJ à 1,5 mJ, la durée de pulsation de 50 ns à 250 ns, le diamètre de spot de façonnage est de 0,05 mm à 0,2 mm et l'espacement entre les différents microcratères est de 0,25 mm à 0,8 mm.
